(19) Europäisches Patentamt
European Patent Office
Office européen des brevets

(11) **EP 4 102 911 A1**

(12) **EUROPEAN PATENT APPLICATION**
published in accordance with Art. 153(4) EPC

(43) Date of publication:
**14.12.2022 Bulletin 2022/50**

(21) Application number: **20918801.0**

(22) Date of filing: **12.02.2020**

(51) International Patent Classification (IPC):
**H04W 72/04** $^{(2009.01)}$

(52) Cooperative Patent Classification (CPC):
**H04W 72/04**

(86) International application number:
**PCT/CN2020/074884**

(87) International publication number:
**WO 2021/159308 (19.08.2021 Gazette 2021/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.**
**Wusha, Chang'an
Dongguan,
Guangdong 523860 (CN)**

(72) Inventor: **XU, Weijie
Dongguan, Guangdong 523860 (CN)**

(74) Representative: **Ipside
7-9 Allées Haussmann
33300 Bordeaux Cedex (FR)**

(54) **TRANSMISSION METHOD AND APPARATUS**

(57) Embodiments of the present application provide a transmission method and apparatus. The method includes: monitoring a repetitively transmitted PDCCH in at least one physical downlink control channel PDCCH search space. By monitoring the repetitively transmitted PDCCH in the PDCCH search space, repetitive transmission of the PDCCH can be effectively realized, thereby realizing effective coverage enhancement for the PDCCH.

Monitor a repetitively transmitted PDCCH in at least one physical downlink control channel PDCCH search space ⟩ S601

FIG. 6

EP 4 102 911 A1

**Description**

**TECHNICAL FIELD**

The present application relates to communication technology, and in particular, to a transmission method and apparatus.

**BACKGROUND**

In new radio (new radio, NR) of 5G, it is a very important technical means to use repetitive transmission to enhance downlink coverage.

At present, NR has supported a multi-slot physical downlink shared channel (physical downlink shared channel, PDSCH) and a multi-slot physical uplink shared channel (physical uplink shared channel, PUSCH), so as to realize repetitive transmission of PDSCH and PUSCH. However, NR does not support a multi-slot physical downlink control channel (physical downlink control channel, PDCCH) at present, and when performing downlink coverage enhancement for PDCCH, it usually configures a larger aggregation level.

However, configuring a larger aggregation level has limited improvement on coverage enhancement, and thus effective coverage enhancement cannot be achieved for the PDCCH.

**SUMMARY**

Embodiments of the present application provides a transmission method and apparatus, so as to avoid the problem that effective coverage enhancement cannot be achieved for PDCCH.

In a first aspect, an embodiment of the present application provides a transmission method, including: monitoring a repetitively transmitted PDCCH in at least one physical downlink control channel PDCCH search space.

In a second aspect, an embodiment of the present application provides a transmission method, including: sending a repetitively transmitted PDCCH to a terminal device in at least one physical downlink control channel PDCCH search space.

In a third aspect, an embodiment of the present application provides a transmission apparatus, including: a monitoring module, configured to monitor a repetitively transmitted PDCCH in at least one physical downlink control channel PDCCH search space.

In a fourth aspect, an embodiment of the present application provides a transmission apparatus, including: a sending module, configured to send a repetitively transmitted PDCCH to a terminal device in at least one physical downlink control channel PDCCH search space.

In a fifth aspect, an embodiment of the present application provides a terminal device, including: a transceiver, a processor and a memory; where

the memory stores computer-executable instructions; and
the processor executes the computer-executable instructions stored in the memory to cause the processor to execute the transmission method according to any one of claims 1 to 17.

In a sixth aspect, an embodiment of the present application provides a network device, including: a transceiver, a processor and a memory; where

the memory stores computer-executable instructions; and
the processor executes the computer-executable instructions stored in the memory to cause the processor to execute the transmission method according to any one of claims 18 to 34.

In a seventh aspect, an embodiment of the present application provides a computer-readable storage medium, where computer-executable instructions are stored in the computer-readable storage medium, and the computer-executable instructions, when executed by a processor, are used to execute the transmission method according to any one of claims 1 to 17.

In an eighth aspect, an embodiment of the present application provides a computer-readable storage medium, where computer-executable instructions are stored in the computer-readable storage medium, and the computer-executable instructions, when executed by a processor, are used to execute the transmission method according to any one of claims 18 to 34.

Embodiments of the present application provide a transmission method and apparatus, the method includes: monitoring a repetitively transmitted PDCCH in at least one physical downlink control channel PDCCH search space.

By monitoring the repetitively transmitted PDCCH in the PDCCH search space, the repetitive transmission of the PDCCH can be effectively realized, thereby realizing effective coverage enhancement for the PDCCH.

**BRIEF DESCRIPTION OF DRAWINGS**

FIG. 1 is a schematic diagram of a communication scenario according to an embodiment of the present application;
FIG. 2 is a possible schematic implementation diagram of REGs according to an embodiment of the present application;
FIG. 3 is a schematic diagram of CCEs according to an embodiment of the present application;
FIG. 4 is a schematic diagram of search spaces of different aggregation levels according to an embodiment of the present application;
FIG. 5 is a possible schematic implementation diagram of a search space according to the embodiment of the present application;
FIG. 6 is a first flowchart of a transmission method according to an embodiment of the present application;
FIG. 7 is a possible schematic diagram of monitoring a PDCCH in one PDCCH search space according to an embodiment of the present application;
FIG. 8 is another possible schematic diagram of monitoring a PDCCH in one PDCCH search space according to an embodiment of the present application;
FIG. 9 is a possible schematic diagram of monitoring a PDCCH in a plurality of PDCCH search spaces according to an embodiment of the present application;
FIG. 10 is another possible schematic diagram of monitoring a PDCCH in a plurality of PDCCH search spaces according to an embodiment of the present application;
FIG. 11 is a possible schematic diagram of monitoring a PDCCH in at least one PDCCH search space set according to an embodiment of the present application;
FIG. 12 is another possible schematic diagram of monitoring a PDCCH in at least one PDCCH search space set according to an embodiment of the present application;
FIG. 13 is a second flowchart of a transmission method according to an embodiment of the present application;
FIG. 14 is a first schematic structural diagram of a transmission apparatus according to an embodiment of the present application;
FIG. 15 is a second schematic structural diagram of a transmission apparatus according to an embodiment of the present application;
FIG. 16 is a schematic structural diagram of a terminal device according to an embodiment of the present application;
FIG. 17 is a schematic structural diagram of a network device according to an embodiment of the present application.

**DESCRIPTION OF EMBODIMENTS**

In order to facilitate understanding, concepts involved in the present application are first explained.

3GPP: 3rd Generation Partnership, 3rd Generation Partnership Project.

Terminal device: it may a device that includes wireless transceiver function and can cooperate with a network device to provide communication services for users. Specifically, the terminal device may refer to a user equipment (User Equipment, UE), an access terminal, a user unit, a user station, a mobile station, a mobile platform, a remote station, a remote terminal, a mobile device, a user terminal, a terminal, a wireless communication device, a user agent or a user apparatus. For example, the terminal device may be a cellular phone, a cordless phone, a session initiation protocol (Session Initiation Protocol, SIP) phone, a wireless local loop (Wireless Local Loop, WLL) station, a personal digital processing (Personal Digital Assistant, PDA), a handheld device with wireless communication function, a computing device or other processing device connected to a wireless modem, an on-board device, and a wearable device, a terminal device in a future 5G network or a network after 5G.

Network device: the network device may be a device used to communicate with a terminal device, for example, it may be a base station (Base Transceiver Station, BTS) in a global system for mobile communication (Global System for Mobile Communication, GSM) or a code division multiple access (Code Division Multiple Access, CDMA) communication system. It may also be a base station (NodeB, NB) in a wideband code division multiple access (Wideband Code Division Multiple Access, WCDMA) system, or an evolutional node B (Evolutional Node B, eNB or eNodeB) in an LTE system, or the network device can be a relay station, an access point, an on-board device, a wearable device, and a network-side device in a future 5G network or a network after 5G or a network device in a future evolved public land mobile network (Public Land Mobile Network, PLMN) network, etc.

The network device involved in embodiments of the present application may also be called a radio access network (Radio Access Network, RAN) device. The RAN device is connected with a terminal device and is used to receive data of the terminal device and send the same to a core network device. The RAN device corresponds to different devices in different communication systems. For example, it corresponds to a base station and a base station controller in a 2G system, a radio network controller (Radio Network Controller, RNC) in a 3G system, an evolutional node B (Evolutional Node B, eNB) in a 4G system, and an access network device (such as a gNB, a centralized unit CU, distributed unit DU) in a corresponding 5G system, such as NR, in a 5G system.

Search space: a search space in an LTE system is defined as a series of control channel element (Control Channel Element, CCE) resources requiring blind detection for each aggregation level, including a CCE starting position and the number of candidate resources.

Common search space: a common search space is shared by all UEs in a cell.

Dedicated search space: a dedicated search space is used by one UE.

Control resource set (Control Resource Set, CORESET): is a type of time-frequency resource set introduced in NR, and a UE performs PDCCH detection in a corresponding control resource set. A control resource set consists of a group of resource element groups (Resource Element Group, REG).

Quasi-Co-Location (Quasi-Co-Location, QCL) relationship: a QCL relationship between two signals refers to that the two signals have some correlation in statistical characteristics, including time delay spread, Doppler spread, Doppler frequency offset, average gain and average delay, etc.

Control channel element: a control channel element (Control Channel Element, CCE) is a time-frequency resource including at least one candidate control channel and occupying a smallest number of resources in a frequency domain and a time domain, and the number of resources in the time domain includes the number of symbols which are consecutive in the time domain; and the number of resources in the frequency domain includes the number of subcarriers which are consecutive in the frequency domain. The control channel unit is also called a control channel resource element, or an enhanced control channel element (enhanced Control Channel Element, eCCE), or a new radio control channel element (New Radio Control Channel Element, NR-CCE) in 5G. Frequency domain resource elements included in each control channel element in the frequency domain may be mapped continuously or discretely in the frequency domain, and the mapping mode of the frequency domain resource elements in the time domain is not limited.

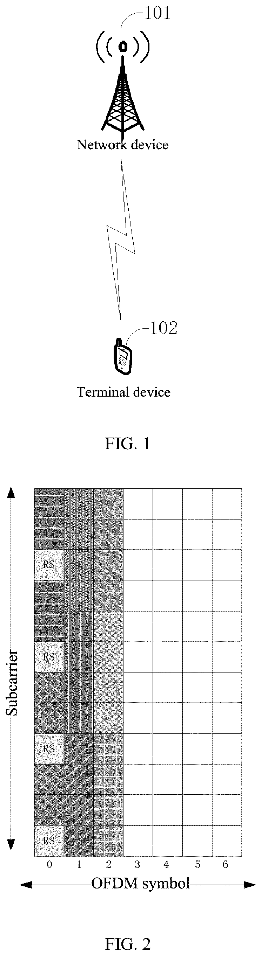

Hereinafter, with reference to FIG. 1, a scenario to which a communication method in the present application is applicable will be described.

FIG. 1 is a schematic diagram of a communication scenario according to an embodiment of the present application. Referring to FIG. 1, a network device 101 and a terminal device 102 are included, and wireless communication can be performed between the network device 101 and the terminal device 102.

A network including the network device 101 and the terminal device 102 may also be referred to as a non-terrestrial network (Non-Terrestrial Network, NTN), where NTN refers to a communication network between a terminal device and a satellite (also referred to as a network device).

It can be understood that technical solutions of embodiments of the present application may be applied to the new radio (New Radio, NR) communication technology, where NR refers to a new generation radio access network technology, and may be applied to a future evolution network, such as the 5th generation mobile communication (the 5th Generation Mobile Communication, 5G) system in the future. Solutions in the embodiments of the present application may also be applied to other wireless communication networks, such as wireless fidelity (Wireless Fidelity, WIFI) and long term evolution (Long Term Evolution, LTE), and the corresponding names may also be replaced by the names of corresponding functions in other wireless communication networks.

The network architecture and business scenarios described in the embodiments of the present application are for the purpose of illustrating the technical solutions of the embodiments of the present application more clearly, and do not constitute a limitation on the technical solutions provided by the embodiments of the present application. It is known to those skilled in the art that with the evolution of the network architecture and the emergence of new business scenarios, the technical solutions provided in the embodiments of the present application are also applicable to similar technical problems.

Relevant technical background of the present application is described below:

With continuous evolution and assistance of wireless communication technology, internet of things (Internet of things, IOT) technology has also ushered in rapid development. For example, machine type communication (Machine Type Communication, MTC)/enhance machine type communication (Enhance Machine Type Communication, eMTC) and narrow band Internet of things (Narrow Band Internet of Things, NB-IoT) series standards promoted by 3GPP organization have become candidate technical standards for 5G massive (Massive) MTC technology.

The technical standards introduced above are expected to play a great role in various aspects of people's production and life, such as smart home, smart city, smart factory, remote monitoring, and smart transportation.

At present, an existing MTC/eMTC terminal device and an NB-IoT terminal device have the following technical advantages: low cost, low price, supporting ultralow power consumption and supporting deep and wide coverage scenarios. These technical advantages are conducive to rapid popularization of the internet of things technology in an early stage of development.

However, these technical advantages also make MTC/eMTC and NB-IoT have limitations in some application scenarios. It can be understood that since a design goal of MTC/eMTC and NB-IoT is to support some applications with low data rate and high transmission delay, the MTC/eMTC terminal device and NB-IoT terminal device described above cannot be applied to some internet of things scenarios requiring relatively high rate, such as video monitoring in intelligent security and industrial applications requiring relatively low delay.

In this case, if NR terminal device is directly used, because design indicators of an NR terminal device, such as transmission rate and transmission delay, far exceed actual requirements of the internet of things scenarios requiring relatively high rate introduced above, directly applying the NR terminal device to the internet of things scenarios introduced above will make the cost relatively high, which is not conducive to market competition.

Based on the above-mentioned problem, in order to improve the terminal system of the 5G massive MTC scenario, it is currently necessary to design an NR MTC terminal device that supports the requirements of a medium transmission rate and medium delay and has low cost. At present, 3GPP calls the terminal equipment of this NR MTC type an NR-light terminal equipment.

Based on the above introduction, it can be determined that an NR-light terminal device needs to support the requirements of a medium transmission rate and medium delay and have low cost. In order to make the NR-light terminal device meet these requirements, the following technical solution can be adopted at present.

In a possible implementation, the cost of the terminal device may be reduced by reducing receiving channels supported by the terminal device.

Specifically, at present, an NR terminal device needs to support at least two receiving channels. In some frequency bands, an NR terminal device needs to support four receiving channels, of which each receiving channel includes components, such as a receiving antenna, a filter, a power amplifier (Power Amplifier, PA), an analog to digital (Analog to Digital, AD) sampler.

Therefore, reducing the number of radio frequency channels (receiving channels) that an NR terminal device needs to be equipped with can significantly reduce the cost of the terminal device. A research result shows that if a terminal device with two radio frequency channels is reduced to a terminal device with one radio frequency channel, the cost of a chip module of the terminal device can be reduced by about 1/3. Therefore, in an NR-light terminal device, the number of receiving channels can be reduced and fewer antennas can be assembled, so as to reduce the cost of the terminal device.

However, although reducing the number of radio frequency channels of the terminal device can effectively reduce the cost of the terminal, the reduction of the number of receiving antennas will also affect the receiving performance of the terminal device and further affect downlink coverage. For example, the number of receiving antennas of the terminal device is reduced by half, such as reducing from 2 receiving antennas to 1 receiving antenna, the reception of a downlink channel will lose about 3dB. Therefore, in order to compensate for the impact of reducing the number of radio frequency channels of the terminal device on downlink coverage, it is necessary to design a signal transmission mechanism to compensate for and restore the loss of downlink coverage.

On the other hand, in some scenarios, such as an industrial monitoring scenario, a communication module may be placed in an area covered by a metal object (such as a mechanical arm), so there will be a further loss of network signal. For such a working scenario, it is necessary to design a coverage enhancement solution to make up for the performance loss.

Repetitive transmission is a typical and effective coverage enhancement solution. For example, in theory, two repetitive transmissions may bring a combined gain of 3dB compared with a single transmission; 10 repetitive transmissions may bring a combined gain of 10dB.

At present, NR has supported a transmission solution of a multi-slot PDSCH and a multi-slot PUSCH, so the terminal device can perform repetitive transmission of PDSCH by a multi-slot PDSCH and perform repetitive transmission of PUSCH by a multi-slot PUSCH, so as to realize coverage enhancement.

However, NR currently does not support the transmission of a multi-slot PDCCH. Based on the above introduction, those skilled in the art can understand that, for an NR-light terminal, each channel of NR has a requirement of coverage compensation or coverage enhancement. At present, NR's coverage enhancement solution for PDCCH only supports a larger aggregation level, such as AL=16, and the ability of coverage enhancement by supporting a large aggregation level is relatively limited, resulting in the inability to achieve effective coverage enhancement for PDCCH.

Therefore, for a PDCCH channel, a solution of coverage compensation or coverage enhancement is required. Aiming at the problem in the prior art, the present application puts forward the following technical ideas:

By monitoring a repetitively transmitted PDCCH in a PDCCH search space configured by a network device, the repetitive transmission of PDCCH can be effectively realized and coverage enhancement can be achieved.

Before introducing the technical solution provided by the present application, relevant concepts, such as resource element group (Resource Element Group, REG), control channel elements (Control Channel Elements, CCE), search space, CORESET, involved in the present application are explained firstly.

To effectively configure a time-frequency resource for PDCCH, NR defines two dedicated control channel resource elements: REG and CCE.

One REG is composed of 4 or 6 adjacent resource elements (Resource Elements) REs located on the same OFDM symbol, but there are only four REs that can be used. A REG composed of six REs contains 2 reference signals (reference signals, RSs), in which REs occupied by the RSs cannot be used by the REG of PDCCH.

A possible implementation of the REG will be described below with reference to FIG. 2. FIG. 2 is a possible schematic implementation diagram of REGs according to an embodiment of the present application, as shown in FIG. 2:

Because a PDCCH can occupy first 3 OFDM symbols of each subframe in a time domain, a REG can be located in the first 3 OFDM symbols. In FIG. 2, those with a same shadow and color identification are one REG. It can be seen from FIG. 2 that a total of 8 REGs are included in FIG. 2, in which, symbol 0 includes 2 REGs, symbol 1 includes 3 REGs, and symbol 2 includes 3 REGs.

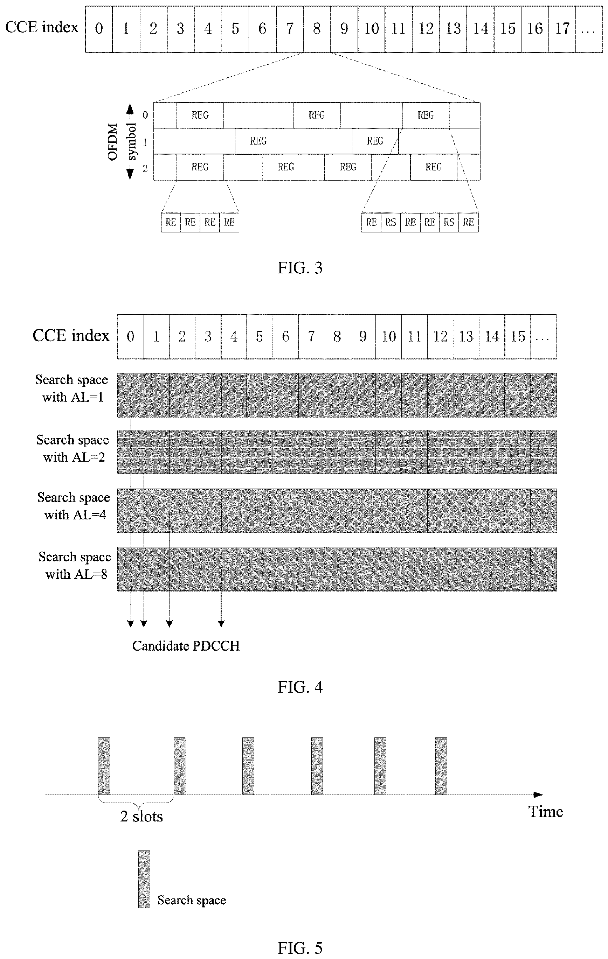

On the basis of the REG introduced above, the following describes CCE with reference to FIG. 3. FIG. 3 is a schematic diagram of CCEs according to an embodiment of the present application, as shown in FIG. 3.

One CCE includes 9 REGs, then one CCE includes 36 REs, and a CCE is a time-frequency resource that includes at least one candidate control channel and occupies the smallest number of time-frequency resources in the frequency domain and the time domain.

Based on the above introduction, a PDCCH search space is described below:

Since a PDCCH is an instruction sent by a network device, and a terminal device has not received other information than some system information before, therefore, the terminal device does not know the number, position, etc. of CCEs occupied by PDCCH. Therefore, the terminal device needs to perform detection by blindly detecting to try possible time-frequency resource positions and aggregation levels of PDCCH, so as to receive a PDCCH. In order to improve efficiency of blind detection, the PDCCH search space is introduced.

Specifically, PDCCH monitoring of an NR terminal device is carried out in a PDCCH search space. The network device may configure up to 10 PDCCH search spaces to the terminal device. The PDCCH search space may be notified to the terminal device by the network device through RRC signaling. The configuration information of the search space may include the information in Table 1 below:

Table 1

| Parameter name | Function |
|---|---|
| Search ID | Used for identifying a corresponding SearchSpace configuration |
| ControlResourceSetId | Used for indicating an ID of a CORESET to which it is bound, so as to configure time-frequency resources of the PDCCH search space |
| monitoringSlotPeriodicityAndOffset | Used for indicating a period of SearchSpace and an offset within the period. Currently, periods supported by NR include 1, 2, 4, 5, 8, 10, 16, 20, 40, 80, 160, 320, 640, 1280, and 2560 slots |
| Duration | Used for indicating the number of slots consecutively monitored in a PDCCH search space period |
| monitoringSymbolsWithinSlot | Used for indicating a starting symbol of SearchSpace in a slot |
| PDCCH candidates | Used for indicating configuration information of candidate control channels (PDCCH candidates) |
| Type of Search space | Indicate whether the PDCCH search space is CSS or USS |

Each PDCCH search space configured by the network device for the terminal device corresponds to its own configuration information.

In an embodiment of the present application, the search space is a segment of logical resources defined according to CCE, which is a set of control channels that need to be detected, where the PDCCH search space may include a plurality of candidate control channels with a same aggregation level, where a candidate control channel is composed of L CCEs, L is called an aggregation level of the candidate control channel, where L is an integer greater than or equal to 1, or the value of L belongs to the set {1, 2, 4, 8, 16} or {4, 8, 16} or {1, 2, 4, 8, 16, 32}.

The indexes of L CCEs included in one candidate control channel is consecutive, where a starting CCE represents a CCE with a smallest number (index) among the L CCEs. A set composed of a plurality of candidate control channels is also called a search space set. At the same time, candidate control channels having a same number of control channel resource elements and included in the search space set may be divided into a group. Each group of candidate control channels constitutes a search space. The number of control channel resource elements included in the candidate control channels of each group is defined as an aggregation level (aggregation level, AL) of the search space.

The following describes the search spaces of different aggregation levels with reference to FIG. 4. FIG. 4 is a schematic diagram of search spaces of different aggregation levels according to an embodiment of the present application, as shown in FIG. 4:

A search space with AL=1 includes a plurality of candidate PDCCHs, where each candidate PDCCH includes 1 CCE, that is to say, the aggregation level of each candidate PDCCH is 1;

A search space with AL=2 includes a plurality of candidate PDCCHs, where each candidate PDCCH includes 2 CCEs, that is to say, the aggregation level of each candidate PDCCH is 2;

A search space with AL=4 includes a plurality of candidate PDCCHs, where each candidate PDCCH includes 4 CCEs, that is to say, the aggregation level of each candidate PDCCH is 4;

A search space with AL=8 includes a plurality of candidate PDCCHs, where each candidate PDCCH includes 8 CCEs, that is to say, the aggregation level of each candidate PDCCH is 8.

Based on the content of the search space introduced above, it can be determined that the network device may configure a plurality of search spaces for the terminal device, where configuration information of each search space may be different from each other. A possible implementation of the PDCCH search space is described below by taking an example where a period of the PDCCH search space configured by the network device is 2 slots. FIG. 5 is a possible schematic implementation diagram of a search space according to the embodiment of the present application, as shown in FIG. 5:

Because the current period of the PDCCH search space is 2 slots, a PDCCH search space will be configured every two slots, and the terminal device can monitor a PDCCH in this search space to acquire the PDCCH.

FIG. 5 shows a case of configuring one search space. In an actual implementation process, when the network device configures a plurality of search spaces for the terminal device, specific configuration information of each search space may be determined according to actual situation, which will not be repeated here.

CORESET is introduced in the following.

In an LTE system, a PDCCH occupies an entire frequency band in the frequency domain, and occupies the first to the third OFDM symbols of each subframe in the time domain. That is to say, the network device only needs to inform the terminal device of the number of OFDM symbols occupied by the PDCCH, then the terminal device may determine the search space of the PDCCH.

However, in an NR system, due to a large bandwidth of the system, if the PDCCH still occupies the entire bandwidth, it will not only waste resources, but also have high blind detection complexity.

Therefore, a concept of CORESET is introduced into the NR system. CORESET is used to define a time-frequency resource set that carries control information. The terminal device detects a PDCCH channel in the time-frequency resource set to obtain scheduling information.

PDCCH is transmitted in CORESET. CORESET occupies 1 to 3 symbols in the time domain, and occupies a configurable bandwidth in the frequency domain, no longer fixedly occupying the entire system bandwidth. The frequency resource bandwidth and the number of time domain symbols occupied by CORESET may be configured to the terminal by high-level signaling.

The configuration information of CORESET may include, for example, frequency domain resource information, time domain resource information, time length information, etc.

In addition, the configuration information of the CORESET may further include transmission configuration indication (Transmission Configuration Indication, TCI) information. The TCI information is used to indicate QCL information of a de modulation reference signal (De Modulation Reference Signal, DMRS) antenna port used for transmitting the PDCCH in the PDCCH control resource set. The QCL information may be represented by means of a QCL relationship between downlink reference signals. The downlink reference signal may be SS/PBCH block, or CSI-RS.

For example, if a receiving port of the PDCCH transmitted in the PDCCH CORESET has a QCL relationship with a receiving port of a synchronization signal block (SS/PBCH block) 1, the TCI information may be used to represent a QCL relationship between the receiving port of the PDCCH and the receiving port of the SSB 1.

If the receiving port of the PDCCH transmitted in the PDCCH CORESET has a QCL relationship with a receiving port of an SSB 2, the TCI information may be used to represent a QCL relationship between the receiving port of the PDCCH and the receiving port of the SSB 2.

If there are N antenna ports used to send N SSBs respectively, then there is a QCL set, and the QCL set includes N pieces of QCL information, which are the QCL information of SSB 1, the QCL information of SSB 2, ..., information of SSB N. TCI information of the PDCCH control resource set may indicate QCL information of a certain SSB among the N SSBs, so that the terminal device receives a PDCCH in the PDCCH control resource set based on the QCL information of the SSB, that is, the terminal device may assume that there is a QCL relationship between the reception of the PDCCH and the reception of the SSB..

The following will introduce an index of CCE corresponding to PDCCH at the monitoring time:

For a PDCCH candidate $m_{s,n_{CI}}$, which is associated with CORESET p, corresponding to a carrier domain value $n_{CI}$ in a slot $n_{s,f}^{\mu}$, and corresponding to an aggregation level L, a CCE index thereof may be given by the following formula 1:

$$L \times \left\{ \left( Y_{p,n_{s,f}^{\mu}} + \left\lfloor \frac{m_{s,n_{CI}} \times N_{CCE,p}}{L \times M_{s,max}^{(L)}} \right\rfloor + n_{CI} \right) \bmod \left\lfloor \frac{N_{CCE,p}}{L} \right\rfloor \right\} + i \qquad \text{formula 1}$$

for CSS, $Y_{p,n_{s,f}^{\mu}} = 0$ ;

for USS, $Y_{p,n_{s,f}^{\mu}} = \left( A_p \times Y_{p,n_{s,f}^{\mu}-1} \right) \bmod D$ , $Y_{p,-1} = n_{RNTI} \neq 0$, and for p mod 3=0, $A_p$ =39827, for p mod 3=1, $A_p$=39829, for p mod 3=2, $A_p$ =39839 and D=65537;

i=0, ..., L-1;

$N_{CCE,p}$ is the number of CCEs in CORESET p, and the indexes are from 0 to $N_{CCE,p}$ - 1;

$n_{CI}$ is a value of a carrier indication field when the terminal device is configured with the carrier indication field by CrossCarrierSchedulingConfig, otherwise $n_{CI}$=0;

$m_{s,n_{CI}} = 0, ..., M_{s,n_{CI}}^{(L)} - 1$ , where $M_{s,n_{CI}}^{(L)}$ is configured as the number of PDCCH candidate positions with aggregation level L monitored on carrier $n_{CI}$ and search space set s;

for CSS, $M_{s,max}^{(L)} = M_{s,0}^{(L)}$ ;

for USS, $M_{s,max}^{(L)}$ is a maximum $M_{s,n_{CI}}^{(L)}$ with aggregation level L monitored on the corresponding search space s among all configured $n_{CI}$ values;

where RNTI value used by $n_{RNTI}$ is C-RNTI.

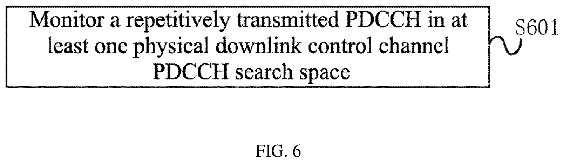

Based on the above introduction, the transmission method provided by the present application will be described below. First, it will be described with reference to FIG. 6, and FIG. 6 is a first flowchart of a transmission method according to an embodiment of the present application:

As shown in FIG. 6, the method includes:

S601, monitor a repetitively transmitted PDCCH in at least one physical downlink control channel PDCCH search space.

The terminal device may monitor a PDCCH in a PDCCH search space, and in combination with the introduction in the above embodiments, those skilled in the art can determine that each PDCCH search space corresponds to its own configuration information, where the configuration information includes a period of the search space, so the network device may send the PDCCH that needs to be repetitively transmitted through the PDCCH search space, so that the terminal device can monitor the repetitively transmitted PDCCH in the PDCCH search space.

And in this embodiment, the network device may configure at least one PDCCH search space for the terminal device, so the terminal device can monitor the repetitively transmitted PDCCH in the at least one PDCCH search space.

In an actual implementation process, whether to monitor in one PDCCH search space or a plurality of PDSCH search spaces may be selected according to actual requirements, which is not limited this time.

The transmission method provided by the embodiment of the present application includes: monitoring a repetitively transmitted PDCCH in at least one physical downlink control channel PDCCH search space. By monitoring the repetitively transmitted PDCCH in the PDCCH search space, repetitive transmission of the PDCCH can be effectively realized, thereby realizing effective coverage enhancement of the PDCCH.

In addition, the transmission method provided by an embodiment of the present application further includes: receiving indication information from a network device, where the indication information includes first indication information, and the first indication information is used to indicate that a number of repetitive transmissions of the repetitively transmitted PDCCH is N, where N is an integer greater than or equal to 1.

The number of repetitive transmissions of the PDCCH is indicated by the first indication information, so that the terminal device can determine, according to the number of repetitive transmissions, the number of times at which monitoring is required.

For example, for a terminal device supporting 2 antennas, since its coverage performance is lost by 3dB compared with a terminal device with 4 antennas, the number of repetitive transmissions may be indicated or agreed to be twice; while for a terminal device that only supports 1 antenna, the number of repetitive transmissions may be agreed to be 4 times.

In a possible implementation, the number of repetitive transmissions of the PDCCH may also be pre-agreed according to a condition of the terminal device.

Or, in another possible implementation, the number of repetitive transmissions of the PDCCH may also be determined according to a parameter in the configuration information of the PDCCH search space, that is, the content in Table 1 introduced in the above embodiment.

For example, the parameter may be "duration" and/or "monitoringSymbolsWithinSlot" in the above embodiment. For example, repetitive transmissions of a PDCCH may occupy all PDCCH monitoring times determined by "duration" and/or "monitoringSymbolsWithinSlot" within one PDCCH search space period.

Based on the above embodiment, the terminal device may monitor a PDCCH in one or more PDCCH search spaces configured by the network device. Therefore, the repetitively transmitted PDCCH may be within one PDCCH search space or across a plurality of PDCCH search spaces. Several possible implementations of monitoring the repetitively transmitted PDCCH in at least one PDCCH search space in the present application are described below:

In a possible case, the terminal device may monitor a repetitively transmitted PDCCH in one PDCCH search space.

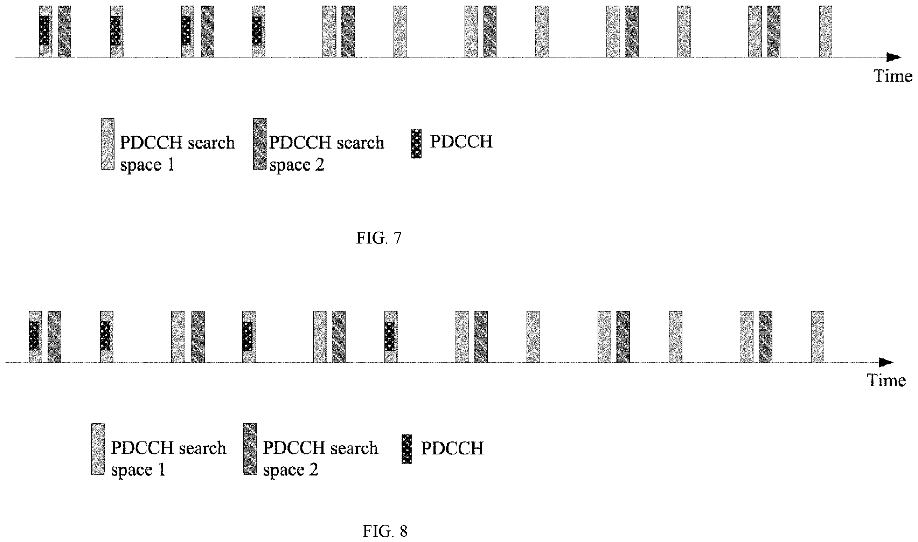

A possible implementation of monitoring a repetitively transmitted PDCCH in one PDCCH search space will be described with reference to FIG. 7 and FIG. 8. FIG. 7 is a possible schematic diagram of monitoring a PDCCH in one PDCCH search space according to an embodiment of the present application, and FIG. 8 is another possible schematic diagram of monitoring a PDCCH in one PDCCH search space according to an embodiment of the present application.

In this embodiment, the number of repetitive transmissions of the repetitively transmitted PDCCH is N, so the terminal device needs to monitor at N monitoring times to receive N repetitive transmissions of the PDCCH. It can be understood that the monitoring time is a time corresponding to the PDCCH search space in each period, so one PDCCH search space corresponds to a plurality of monitoring times.

In a possible implementation, the repetitively transmitted PDCCH may be monitored in N consecutive monitoring times of the one PDCCH search space.

Referring to FIG. 7, it is assumed that the network device configures two PDCCH search spaces to the terminal device, namely PDCCH search space 1 and PDCCH search space 2, where a period of PDCCH search space 1 and a period of PDCCH search space 2 are different. It can be seen from FIG. 6 that the period of PDCCH search space 1 is smaller than that of PDCCH search space 2.

In this embodiment, a repetitively transmitted PDCCH is monitored in one PDCCH search space. Assuming that the repetitively transmitted PDCCH is monitored in PDCCH search space 1, the repetitively transmitted PDCCH is only within PDCCH search space 1.

And assuming that the number of repetitive transmissions is 4, the example given in FIG. 6 is to monitor the repetitively transmitted PDCCH in 4 consecutive monitoring times of PDCCH search space 1. It can be seen from FIG. 6 that 4 repetitive transmissions of the PDCCH are located at the 4 consecutive monitoring times of PDCCH search space 1.

In another possible implementation, the repetitively transmitted PDCCH may be monitored at N non-consecutive monitoring times of the one PDCCH search space.

Referring to FIG. 8, it is assumed that the network device configures two PDCCH search spaces to the terminal device, namely PDCCH search space 1 and PDCCH search space 2, where a period of PDCCH search space 1 and a period of PDCCH search space 2 are different. It can be seen from FIG. 8 that the period of PDCCH search space 1 is smaller than that of PDCCH search space 2.

In this embodiment, a repetitively transmitted PDCCH is monitored in one PDCCH search space. Assuming that the repetitively transmitted PDCCH is monitored in PDCCH search space 1, the repetitively transmitted PDCCH is only within PDCCH search space 1.

And assuming that the number of repetitive transmissions is 4, the example given in FIG. 8 is to monitor the repetitively transmitted PDCCH at 4 non-consecutive monitoring times of PDCCH search space 1. It can be seen from FIG. 8 that 4 repetitive transmissions of the PDCCH are located at the 4 non-consecutive monitoring times of PDCCH search space 1, where there is one monitoring time of PDCCH search space 1 between a second monitoring time and a third monitoring time, and between the third monitoring time and a fourth monitoring time.

In this embodiment, the indication information further includes third indication information, where the third indication information is used to indicate the N non-consecutive monitoring times. That is to say, which monitoring times are the N non-consecutive monitoring times and how to set the interval between them may be indicated by the third indication information; or may also be preset, which is not limited in this embodiment.

In an optional implementation, the network device may also, for example, configure more PDCCH search spaces for the terminal device, and may monitor the repetitively transmitted PDCCH in any of the PDCCH search spaces, and the implementation mode thereof is similar to that described in FIG. 7 and FIG. 8 above, which will not be repeated here, and corresponding expansion may be performed according to the content of the above embodiments.

In another possible case, the terminal device may monitor a repetitively transmitted PDCCH in two or more than two PDCCH search spaces.

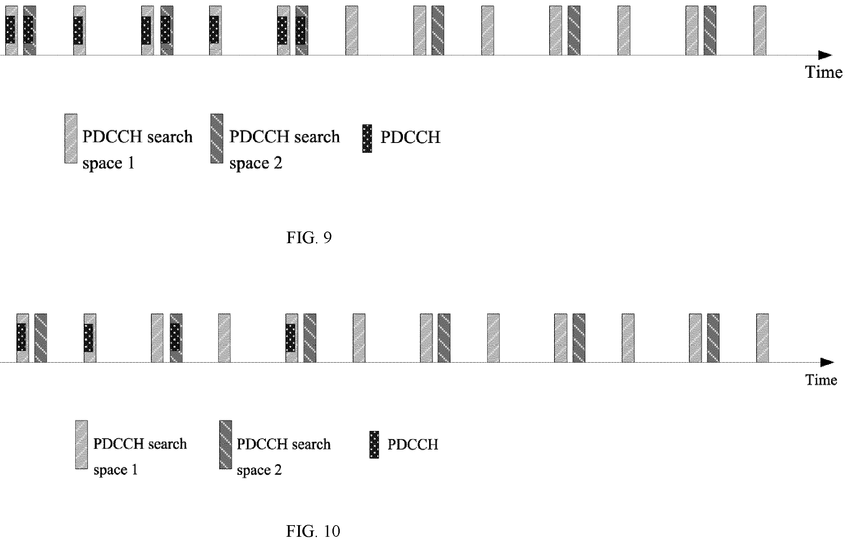

A possible implementation of monitoring a repetitively transmitted PDCCH in two or more than two PDCCH search spaces will be described with reference to FIG. 9 and FIG. 10. FIG. 9 is a possible schematic diagram of monitoring a PDCCH in a plurality of PDCCH search spaces according to an embodiment of the present application. FIG. 10 is another possible schematic diagram of monitoring a PDCCH in a plurality of PDCCH search spaces according to an embodiment of the present application.

In this embodiment, the number of repetitive transmissions of the repetitively transmitted PDCCH is N, so the terminal device needs to monitor at N monitoring times to receive N repetitive transmissions of the PDCCH. It can be understood that the monitoring time is a time corresponding to the PDCCH search space in each period, so one PDCCH search space corresponds to a plurality of monitoring times.

In a possible implementation, the repetitively transmitted PDCCH may be monitored at N consecutive monitoring times of two or more than two PDCCH search spaces.

Referring to FIG. 9, it is assumed that the network device configures two PDCCH search spaces to the terminal device, namely PDCCH search space 1 and PDCCH search space 2, where a period of PDCCH search space 1 and a period of PDCCH search space 2 are different. It can be seen from FIG. 9 that the period of PDCCH search space 1 is smaller than that of PDCCH search space 2.

In this embodiment, the repetitively transmitted PDCCH is monitored in two or more than two PDCCH search spaces, that is, the repetitively transmitted PDCCH is monitored in PDCCH search space 1 and PDCCH search space 2, and the repetitively transmitted PDCCH can be transmitted across a plurality of PDCCH search spaces.

And assuming that the number of repetitive transmissions is 8, the example given in FIG. 9 is to monitor the repetitively transmitted PDCCH at 8 consecutive monitoring times of PDCCH search space 1 and PDCCH search space 2. It can be seen from FIG. 9 that 8 repetitive transmissions of the PDCCH are across the search spaces and are located at 8 consecutive monitoring times of PDCCH search space 1 and PDCCH search space 2.

In another possible implementation, the repetitively transmitted PDCCH may be monitored at N non-consecutive monitoring times of the two or more than two PDCCH search space.

Referring to FIG. 10, it is assumed that the network device configures two PDCCH search spaces to the terminal device, namely PDCCH search space 1 and PDCCH search space 2, where a period of PDCCH search space 1 and a period of PDCCH search space 2 are different. It can be seen from FIG. 8 that the period of PDCCH search space 1 is smaller than that of PDCCH search space 2.

In this embodiment, the repetitively transmitted PDCCH is monitored in two or more than two PDCCH search spaces, that is, the repetitively transmitted PDCCH is monitored in PDCCH search space 1 and PDCCH search space 2, and the repetitively transmitted PDCCH can be transmitted across a plurality of PDCCH search spaces.

And assuming that the number of repetitive transmissions is 4, the example given in FIG. 10 is to monitor the repetitively transmitted PDCCH at 4 non-consecutive monitoring times of PDCCH search space 1 and PDCCH search space 2. It can be seen from FIG. 10 that the PDCCH monitoring times occupied by 4 repetitive transmissions of the PDCCH are 4 PDCCH monitoring times formed at intervals of one PDCCH monitoring time in time sequence among all the PDCCH monitoring times provided in PDCCH search space 1 and PDCCH search space 2.

In this embodiment, the indication information may further include third indication information, where the third indication information is used to indicate the N non-consecutive monitoring times. That is to say, which monitoring times are the N non-consecutive monitoring times and how to set the interval between them may be indicated by the third indication information; or may also be preset, which is not limited in this embodiment.

In an optional implementation, the network device may, for example, configure more PDCCH search spaces for the terminal device, and may monitor the repetitively transmitted PDCCH in any two or more than two of the PDCCH search spaces, and the implementation mode thereof is similar to that described for FIG. 9 and FIG. 10 above, which will not be repeated here, and corresponding expansion may be performed according to the content of the above embodiments.

In the transmission method provided by the embodiment of the present application, by monitoring the repetitively transmitted PDCCH in two or more than two PDCCH search spaces, since the PDCCH search spaces don't need to use different TCI states, the PDCCH can be sent using beams which are not used, which can make the PDCCH repetitive transmission obtain spatial diversity gain, so as to improve the performance of PDCCH repetitive transmission.

Based on the above embodiments, the indication information in the present application further includes second indication information, and the second indication information is used to indicate at least one PDCCH search space set, where the PDCCH search space set includes at least one PDCCH search space.

For example, a network device configures a plurality of PDCCH search spaces to the terminal device currently, including PDCCH search space 1, PDCCH search space 2, PDCCH search space 3 and PDCCH search space 4. For example, the second indication information may indicate that {PDCCH search space 1, PDCCH search space 2} is a PDCCH search space set, and {PDCCH search space 3, PDCCH search space 4} is a search space set; or, the second indication information may also indicate that {PDCCH search space 1} is a PDCCH search space set, and {PDCCH search space 2, PDCCH search space 3, PDCCH search space 4} is a search space set. This embodiment does not limit a division method of the search space set, which may be determined according to actual requirements.

In an optional implementation, the PDCCH search space set may also be preset.

Based on this, in a further possible case, the terminal device may monitor the repetitively transmitted PDCCH in at least one PDCCH search space set.

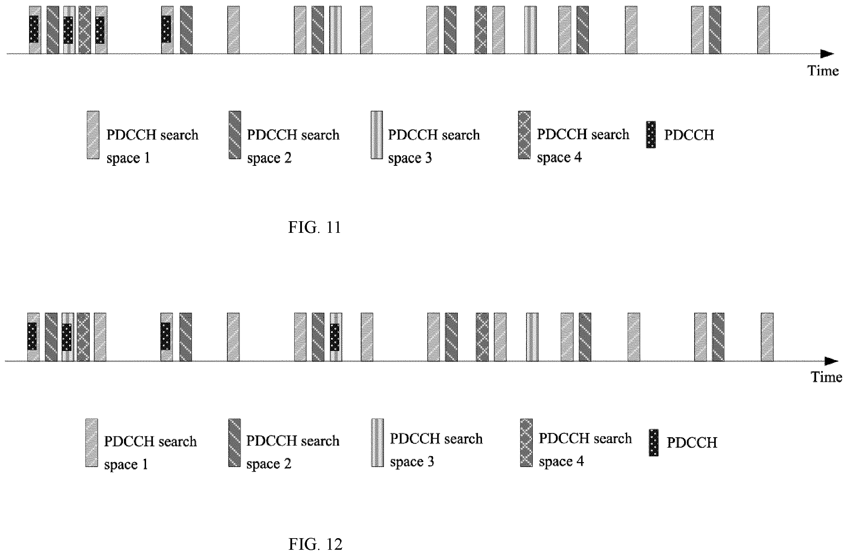

A possible implementation of monitoring the repetitively transmitted PDCCH in the at least one PDCCH search space set will be described with reference to FIG. 11 and FIG. 12. FIG. 11 is a possible schematic diagram of monitoring a PDCCH in at least one PDCCH search space set according to an embodiment of the present application. FIG. 12 is another possible schematic diagram of monitoring a PDCCH in at least one PDCCH search space set according to an embodiment of the present application.

In this embodiment, the number of repetitive transmissions of the repetitively transmitted PDCCH is N, so the terminal device needs to monitor at N monitoring times to receive N repetitive transmissions of the PDCCH. It can be understood that the monitoring time is a time corresponding to a PDCCH search space in each period, so one PDCCH search space corresponds to a plurality of monitoring times.

In a possible implementation, the repetitively transmitted PDCCH may be monitored at N consecutive monitoring times of the at least one PDCCH search space set.

Referring to FIG. 11, it is assumed that the network device configures four PDCCH search spaces to the terminal device, namely PDCCH search space 1, PDCCH search space 2, PDCCH search space 3 and PDCCH search space 4, where periods of PDCCH search spaces 1, 2, 3 and 4 are different from each other. It can be seen from FIG. 11 that a period of PDCCH search space 1 is smaller than that of PDCCH search space 2, and a period of PDCCH search space 2 is smaller than that of PDCCH search space 3, a period of PDCCH search space 3 is smaller than that of PDCCH search space 4.

In this embodiment, a repetitively transmitted PDCCH is monitored in at least one PDCCH search space set. Assuming that in this embodiment, {PDCCH search space 1, PDCCH search space 3} is a first PDCCH search space set, and {PDCCH search space 2, PDCCH search space 4} is a second search space set, and assuming that the repetitively transmitted PDCCH is monitored on the first PDCCH search space set, that is to say, the repetitively transmitted PDCCH is monitored in PDCCH search space 1 and PDCCH search space 3, then the repetitively transmitted PDCCH can be transmitted across a plurality of PDCCH search spaces.

And assuming that the number of repetitive transmissions is 4, the example given in FIG. 11 is to monitor the repetitively transmitted PDCCH at 4 consecutive monitoring times of PDCCH search space 1 and PDCCH search space 3. It can be seen from FIG. 11 that 4 repetitive transmissions of the PDCCH are across the search spaces and are located at 4 consecutive monitoring times of PDCCH search space 1 and PDCCH search space 3.

In another possible implementation, the repetitively transmitted PDCCH may be monitored at N non-consecutive monitoring times of the at least one PDCCH search space set.

Referring to FIG. 12, it is assumed that the network device configures four PDCCH search spaces to the terminal device, namely PDCCH search space 1, PDCCH search space 2, PDCCH search space 3 and PDCCH search space 4, where periods of PDCCH search spaces 1, 2, 3 and 4 are different from each other. It can be seen from FIG. 11 that a period of PDCCH search space 1 is smaller than that of PDCCH search space 2, and a period of PDCCH search space 2 is smaller than that of PDCCH search space 3, a period of PDCCH search space 3 is smaller than that of PDCCH search space 4.

In this embodiment, a repetitively transmitted PDCCH is monitored in at least one PDCCH search space set. Assuming that in this embodiment, {PDCCH search space 1, PDCCH search space 3} is a first PDCCH search space set, and {PDCCH search space 2, PDCCH search space 4} is a second search space set, and assuming that the repetitively transmitted PDCCH is monitored on the first PDCCH search space set, that is to say, the repetitively transmitted PDCCH is monitored in PDCCH search space 1 and PDCCH search space 3, then the repetitively transmitted PDCCH can be transmitted across a plurality of PDCCH search spaces.

And assuming that the number of repetitive transmissions is 4, the example given in FIG. 12 is to monitor the repetitively transmitted PDCCH at 4 non-consecutive monitoring times of PDCCH search space 1 and PDCCH search space 3. It can be seen from FIG. 12 that 4 repetitive transmissions of the PDCCH are across the search spaces and are located at 4 non-consecutive monitoring times of PDCCH search space 1 and PDCCH search space 3.

It can be seen from FIG. 12 that the PDCCH monitoring times occupied by the 4 repetitive transmissions of the PDCCH are 4 PDCCH monitoring times formed at intervals of two PDCCH monitoring times in time sequence among all the PDCCH monitoring times provided in PDCCH search space 1 and PDCCH search space 3.

In this embodiment, the indication information may further include third indication information, where the third indication information is used to indicate the N non-consecutive monitoring times. That is to say, which monitoring times are the N non-consecutive monitoring times and how to set the intervals between them may be indicated by the third indication information; or may also be preset, which is not limited in this embodiment.

In an optional implementation, the network device may, for example, configure more PDCCH search spaces for the terminal device, and the network device may also indicate any possible division of the PDCCH search space set through the second indication information. In an actual implementation process, the terminal device may monitor the repetitively transmitted PDCCH in one of the PDCCH search space sets, or it may also monitor the repetitively transmitted PDCCH in a plurality of PDCCH search space sets, the implementation method thereof is similar to that described above and will not be repeated here.

Based on the above embodiment, in the transmission method provided by the embodiment of the present application, during monitoring the repetitively transmitted PDCCH, besides first determining the number of search spaces and then determining whether the monitoring times of the search spaces are consecutive, it is also possible to first determine whether the monitoring times are consecutive and then determine the number of search spaces corresponding to the monitoring times.

When monitoring the repetitively transmitted PDCCH in at least one physical downlink control channel PDCCH search space, the present application may further include:

monitoring the repetitively transmitted PDCCH at N consecutive monitoring times of the at least one PDCCH search space.

In a possible implementation, the N consecutive monitoring times are the monitoring times of one PDCCH search space.

For a possible implementation, for example, reference may be made to the illustration of FIG. 7.

In another possible implementation, the N consecutive monitoring times are the monitoring times of a plurality of PDCCH search spaces.

For a possible implementation, for example, reference may be made to the illustration of FIG. 9 and FIG. 11.

Or, when monitoring the repetitively transmitted PDCCH in at least one physical downlink control channel PDCCH search space, the present application may further include:

monitoring the repetitively transmitted PDCCH at N non-consecutive monitoring times of the at least one PDCCH search space.

In a possible implementation, the N non-consecutive monitoring times are the monitoring times of one PDCCH search space.

For a possible implementation, for example, reference may be made to the illustration of FIG. 8.

In another possible implementation, the N consecutive monitoring times are the monitoring times of a plurality of PDCCH search space.

For possible implementations, for example, reference may be made to the illustration of FIG. 10 and FIG. 12.

It should be emphasized here that the number of search spaces and whether the monitoring time is consecutive do not constitute a limiting condition for each other. N consecutive monitoring times, and N non-consecutive monitoring times, may be combined arbitrarily with one search space and a plurality of search spaces. In an actual implementation process, which one is determined first and which one is determined next, may be selected according to an actual situation, which is not limited in this embodiment.

In the transmission method provided by an embodiment of the present application, the indication information further includes fourth indication information, where the fourth indication information is used to indicate a starting time position of the monitoring times, where the starting time position includes at least one of the following: a starting radio frame, a starting slot or a starting symbol.

The PDCCH repetitively transmitted for a plurality of times occupies a plurality of monitoring times. In order to make the network device and the terminal device have a consistent understanding on a time position of a monitoring time occupied by each repetitive transmission of the PDCCH, the network device needs to notify the terminal device of a starting time position of the monitoring times of the PDCCH, so that the terminal device and the network device can determine the same N monitoring positions, so as to smoothly receive and send the PDCCH.

The start time position may be a combination of one or more of the starting radio frame, the starting slot, the starting symbol, etc.

Based on the above embodiments, in the present application, PDCCH aggregation levels corresponding to the repetitively transmitted PDCCH at the N monitoring times are the same.

And control channel elements CCEs of PDCCH candidate positions corresponding to the repetitively transmitted PDCCH at the N monitoring times are the same.

In order to make the PDCCH aggregation level used by the repetitively transmitted PDCCH at N monitoring times and the occupied CCEs consistent, in a possible implementation, some parameters in formula 1 in the above embodiment may be modified to achieve this purpose. For example, there is a following formula 2 currently, where the difference between formula 2 and formula 1 is that the meanings of the parameters are different.

$$L \times \left\{ \left( Y_{p,n_{s,f}^{\mu}} + \left\lfloor \frac{m_{s,n_{CI}} \times N_{CCE,p}}{L \times M_{s,max}^{(L)}} \right\rfloor + n_{CI} \right) \bmod \left\lfloor \frac{N_{CCE,p}}{L} \right\rfloor \right\} + i \qquad \text{formula 2}$$

for CSS, $Y_{p,n_{s,f}^{\mu}} = 0$ ;

for USS, $Y_{p,n_{s,f}^{\mu}} = n_{RNTI}$ , thus, it can be ensured that the starting position of CCEs occupied by each PDCCH aggregation level does not change with the change of slot index.

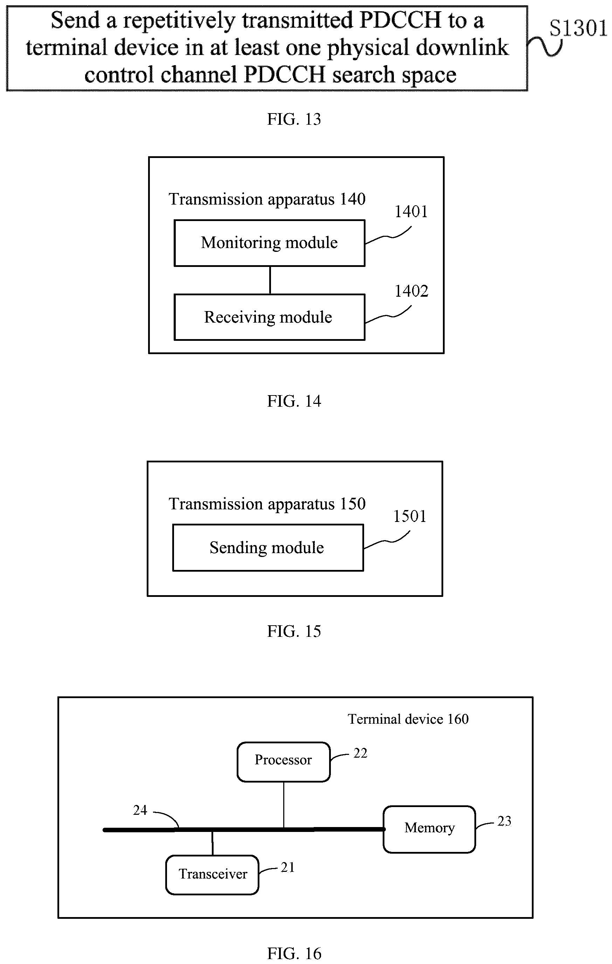

Based on the above introduction, those skilled in the art can determine that when at least one PDCCH search space, the network device configures to the terminal device, and the network device may further send indication information to the terminal device. The transmission method on a network device side is introduced below with reference to FIG. 13.

FIG. 13 is a second flowchart of a transmission method according to an embodiment of the present application.

S1301, send a repetitively transmitted PDCCH to a terminal device in at least one physical downlink control channel PDCCH search space.

In this embodiment, the network device may configure at least one PDCCH search space to the terminal device, where the network device sends the repetitively transmitted PDCCH in the PDCCH search space, so that the terminal device can monitor the repetitively transmitted PDCCH in at least one PDCCH search space.

The transmission method provided by the embodiment of the present application includes: sending a repetitively transmitted PDCCH to a terminal device in at least one physical downlink control channel PDCCH search space. By sending at least one PDCCH search space including the repetitively transmitted PDCCH to the terminal device, the PDCCH can be repetitively transmitted in the PDCCH search space, and repetitive transmission of the PDCCH can be effectively realized, thereby realizing effective coverage enhancement for the PDCCH.

In addition, the transmission method provided by the embodiment of the present application further includes: sending indication information to the terminal device, where the indication information may include first indication information, second indication information, third indication information and fourth indication information, where the meaning of each indication information is the same as that described in the above embodiment, and will not be repeated this time.

In addition, the implementation method of the network device side sending the repetitively transmitted PDCCH to the terminal device in at least one PDCCH search space is similar to the implementation method of the above terminal device side monitoring the repetitively transmitted PDCCH in at least one PDCCH. For the specific implementation, reference can be made to the introduction in the above embodiments and will not be repeated here.

In view of the above, in the embodiment of the present application, by sending the repetitively transmitted PDCCH to the terminal device in at least one PDCCH search space, the terminal device may monitor the PDCCH in the at least one PDCCH search space, so that repetitive transmission of PDCCH is realized and coverage enhancement is effectively realized for the PDCCH.

FIG. 14 is a first schematic structural diagram of a transmission apparatus according to an embodiment of the present application. Referring to FIG. 14, the communication apparatus 140 may include a monitoring module 1401 and a receiving module 1402, where
the monitoring module 1401 is configured to monitor a repetitively transmitted PDCCH in at least one physical downlink control channel PDCCH search space.

In a possible implementation, the apparatus further includes: the receiving module 1402;
the receiving module 1402 is configure to receive indication information from a network device, where the indication information includes first indication information, and the first indication information is used to indicate that a number of repetitive transmissions of the repetitively transmitted PDCCH is N, where N is an integer greater than or equal to 1.

In a possible implementation, the monitoring module 1401 is specifically configured to:
monitor the repetitively transmitted PDCCH in one PDCCH search space.

In a possible implementation, the monitoring module 1401 is specifically configured to:
monitor the repetitively transmitted PDCCH at N consecutive monitoring times of the one PDCCH search space.

In a possible implementation, the monitoring module 1401 is specifically configured to:
monitor the repetitively transmitted PDCCH in N non-consecutive monitoring times of the one PDCCH search space.

In a possible implementation, the monitoring module 1401 is specifically configured to:
monitor the repetitively transmitted PDCCH in two or more than two PDCCH search spaces.

In a possible implementation, the monitoring module 1401 is specifically configured to:
monitor the repetitively transmitted PDCCH in N consecutive monitoring times of the two or more than two PDCCH search spaces.

In a possible implementation, the monitoring module 1401 is specifically configured to:
monitor the repetitively transmitted PDCCH at N non-consecutive monitoring times of the two or more than two PDCCH search spaces.

In a possible implementation, the indication information includes second indication information, and the second indication information is used to indicate at least one PDCCH search space set, where the PDCCH search space set includes at least one PDCCH search space.

In a possible implementation, the monitoring module 1401 is specifically configured to:
monitor the repetitively transmitted PDCCH in the at least one PDCCH search space set.

In a possible implementation, the monitoring module 1401 is specifically configured to:
monitor the repetitively transmitted PDCCH in N consecutive monitoring times of the at least one PDCCH search space set.

In a possible implementation, the monitoring module 1401 is specifically configured to:
monitor the repetitively transmitted PDCCH in N non-consecutive monitoring times of the at least one PDCCH search space set.

In a possible implementation, the indication information further includes third indication information, where the third indication information is used to indicate the N non-consecutive monitoring times.

In a possible implementation, the indication information further includes fourth indication information, where the fourth indication information is used to indicate a starting time position of the monitoring times.

In a possible implementation, the starting time position includes at least one of the following: a starting radio frame, a starting slot or a starting symbol.

In a possible implementation, PDCCH aggregation levels corresponding to the repetitively transmitted PDCCH at the N monitoring times are the same.

In a possible implementation, control channel elements CCEs of PDCCH candidate positions corresponding to the repetitively transmitted PDCCH at the N monitoring times are the same.

The communication apparatus provided by the embodiment of the present application can implement the technical solution shown in the above method embodiment, and its implementation principle and beneficial effects are similar, which will not be repeated here.

FIG. 15 is a second schematic structural diagram of a transmission apparatus according to an embodiment of the present application. Referring to FIG. 15, the communication apparatus 150 may include a sending module 1501, where

the sending module 1501 is configured to send a repetitively transmitted PDCCH to a terminal device in at least one physical downlink control channel PDCCH search space.

In a possible implementation, the sending module 1501 is further configured to:
send indication information to the terminal device, where the indication information includes first indication information, and the first indication information is used to indicate that a number of repetitive transmissions of the repetitively transmitted PDCCH is N, where N is an integer greater than or equal to 1.

In a possible implementation, the sending module 1501 is specifically configured to:
send the repetitively transmitted PDCCH to the terminal device in one PDCCH search space.

In a possible implementation, the sending module 1501 is specifically configured to:
send the repetitively transmitted PDCCH to the terminal device in N consecutive monitoring times of the one PDCCH search space.

In a possible implementation, the sending module 1501 is specifically configured to:
send the repetitively transmitted PDCCH to the terminal device in N non-consecutive monitoring times of the one PDCCH search space.

In a possible implementation, the sending module 1501 is specifically configured to:
send the repetitively transmitted PDCCH to the terminal device in two or more than two PDCCH search spaces.

In a possible implementation, the sending module 1501 is specifically configured to:
send the repetitively transmitted PDCCH to the terminal device in N consecutive monitoring times of the two or more PDCCH search spaces.

In a possible implementation, the sending module 1501 is specifically configured to:
send the repetitively transmitted PDCCH to the terminal device in N non-consecutive monitoring times of the two or more PDCCH search spaces.

In a possible implementation, the indication information includes second indication information, and the second indication information is used to indicate at least one PDCCH search space set, where the PDCCH search space set includes at least one PDCCH search space.

In a possible implementation, the sending module 1501 is specifically configured to:
send the repetitively transmitted PDCCH to the terminal device in the at least one PDCCH search space set.

In a possible implementation, the sending module 1501 is specifically configured to:
send the repetitively transmitted PDCCH to the terminal device in N consecutive monitoring times of the at least one PDCCH search space set.

In a possible implementation, the sending module 1501 is specifically configured to:
send the repetitively transmitted PDCCH to the terminal device in N non-consecutive monitoring times of the at least one PDCCH search space set.

In a possible implementation, the indication information further includes third indication information, where the third indication information is used to indicate the N non-consecutive monitoring times.

In a possible implementation, the indication information further includes fourth indication information, where the fourth indication information is used to indicate a starting time position of the monitoring times.

In a possible implementation, the starting time position includes at least one of the following: a starting radio frame, a starting slot or a starting symbol.

In a possible implementation, PDCCH aggregation levels corresponding to the repetitively transmitted PDCCH at the N monitoring times are the same.

In a possible implementation, control channel elements CCEs of PDCCH candidate positions corresponding to the repetitively transmitted PDCCH at the N monitoring times are the same.

The communication device provided by the embodiment of the present application can implement the technical solution shown in the above method embodiment, and its implementation principle and beneficial effects are similar, which will not be repeated here.

FIG. 16 is a schematic structural diagram of a terminal device according to an embodiment of the present application. Referring to FIG. 16, a terminal device 20 may include: a transceiver 21, a memory 22, and a processor 23. The transceiver 21 may include: a transmitter and/or a receiver. The transmitter may also be referred to as a sending machine, a transmitting machine, a transmitting port, or a transmitting interface, or the like, and the receiver may be referred to as a receiver, a receiving machine, a receiving port, or a receiving interface, or the like. Illustratively, the transceiver 21, the memory 22, and the processor 23 are connected to each other through a bus 24.

The memory 22 stores program instructions;
The processor 23 is configured to execute the program instructions stored in the memory, to cause the terminal device 20 to execute any one of the transmission methods shown above.

A receiver of the transceiver 21 may be configured to execute the receiving function of the terminal device in the above transmission method.

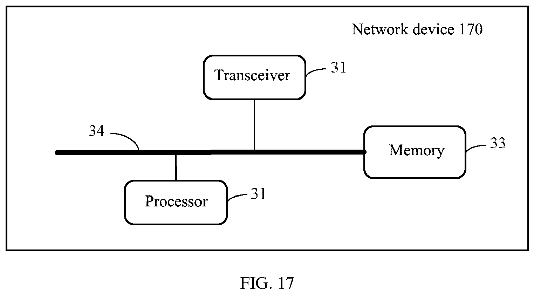

FIG. 17 is a schematic structural diagram of a network device according to an embodiment of the present application. Referring to FIG. 17, a network device 20 may include: a transceiver 31, a memory 32, and a processor 33. The transceiver 31 may include: a transmitter and/or a receiver. The transmitter may also be referred to as a sending machine, a transmitting machine, a transmitting port, or a transmitting interface, or the like, and the receiver may be referred to as a receiver, a receiving machine, a receiving port, or a receiving interface, or the like. Illustratively, the transceiver 31, the memory 32, and the processor 33 are connected to each other through a bus 34.

The memory 32 stores program instructions;
The processor 33 is configured to execute the program instructions stored in the memory, to cause the terminal device 20 to execute any one of the transmission methods shown above.

A receiver of the transceiver 31 may be configured to execute the receiving function of the terminal device in the above transmission method.

An embodiment of the present application provides a computer-readable storage medium, where computer-executable instructions are stored in the computer-readable storage medium, and the computer-executable instructions, when executed by a computer, are used to execute the above transmission method.

An embodiment of the present application provides a computer-readable storage medium, where computer-executable instructions are stored in the computer-readable storage medium, and the computer-executable instructions, when executed by a computer, are used to execute the above transmission method.

An embodiment of the present application may further provide a computer program product, the computer program product may be executed by a processor, and when the computer program product is executed, any of the transmission methods performed by the terminal device shown above can be realized.

The transmission device, computer-readable storage medium, and computer program product of the embodiments of the present application can execute the transmission method performed by the above terminal device, and for a specific implementation process and beneficial effects thereof, reference is made to above, which will not be repeated here.

In several embodiments provided in the present application, it should be understood that the disclosed systems, apparatuses and methods may be implemented in other ways. For example, the apparatus embodiments described above are only illustrative. For example, a division of units is only a logical function division, and there may be another division mode in actual implementation. For example, a plurality of units or components may be combined or integrated into another system, or some features may be ignored or not executed. On the other hand, the mutual coupling or direct coupling or communication connection shown or discussed may be indirect coupling or communication connection through some interfaces, apparatuses or units, and may be in electrical, mechanical or other forms.

The units described as separate components may be or may not be physically separated, and components displayed as units may be or may not be physical units, that is, they may be located in one place or distributed on a plurality of network units. Some or all of the units may be selected according to actual needs to achieve the purpose of the embodiments.

In addition, various functional units in the embodiments of the present application may be integrated into one processing unit, or various units may exist physically alone, or two or more units may be integrated into one unit. The above integrated units may be implemented in the form of hardware or software functional units.

Those skilled in the art can understand that all or part of the steps for implementing the above method embodiments may be completed by hardware related to program instructions. The foregoing computer program may be stored in a computer-readable storage medium. When the computer program is executed by the processor, the steps including the above method embodiments are implemented, and the foregoing storage medium includes various media that can store program code, such as a ROM, a RAM, a magnetic disk or an optical disk.

Finally, it should be noted that the above embodiments are only used to illustrate the technical solutions of the present application, but not to limit them; although the present application has been described in detail with reference to the foregoing embodiments, those of ordinary skill in the art should understand that: they can still modify the technical solutions recorded in the above embodiments, or make equivalent substitution for some or all of the technical features. However, these modifications or substitutions do not make the essence of the corresponding technical solutions deviate from the scope of the technical solutions of the embodiments of the present application.

**Claims**

1. A transmission method, applied to a terminal device, comprising:
   monitoring a repetitively transmitted PDCCH in at least one physical downlink control channel PDCCH search space.

2. The method according to claim 1, further comprising:
   receiving indication information from a network device, wherein the indication information comprises first indication information, and the first indication information is used to indicate that a number of repetitive transmissions of the repetitively transmitted PDCCH is N, wherein N is an integer greater than or equal to 1.

3. The method according to any one of claims 1-2, wherein the monitoring the repetitively transmitted PDCCH in at least one physical downlink control channel PDCCH search space comprises:
   monitoring the repetitively transmitted PDCCH in one PDCCH search space.

4. The method according to claim 3, wherein the monitoring the repetitively transmitted PDCCH in one PDCCH search space comprises:
   monitoring the repetitively transmitted PDCCH in N consecutive monitoring times of the one PDCCH search space.

5. The method according to claim 3, wherein the monitoring the repetitively transmitted PDCCH in one PDCCH search space comprises:
   monitoring the repetitively transmitted PDCCH in N non-consecutive monitoring times of the one PDCCH search space.

6. The method according to any one of claims 1-2, wherein the monitoring the repetitively transmitted PDCCH in at least one physical downlink control channel PDCCH search space comprises:
   monitoring the repetitively transmitted PDCCH in two or more PDCCH search spaces.

7. The method according to claim 6, wherein the monitoring the repetitively transmitted PDCCH in two or more than two PDCCH search spaces comprises:
   monitoring the repetitively transmitted PDCCH in N consecutive monitoring times of the two or more than two PDCCH search spaces.

8. The method according to claim 6, wherein the monitoring the repetitively transmitted PDCCH in two or more PDCCH search spaces comprises:
   monitoring the repetitively transmitted PDCCH in N non-consecutive monitoring times of the two or more than two PDCCH search spaces.

9. The method according to any one of claims 1-2, wherein the indication information comprises second indication information, and the second indication information is used to indicate at least one PDCCH search space set, wherein the PDCCH search space set comprises at least one PDCCH search space.

10. The method according to claim 9, wherein the monitoring the repetitively transmitted PDCCH in at least one physical downlink control channel PDCCH search space comprises:
monitoring the repetitively transmitted PDCCH in the at least one PDCCH search space set.

11. The method according to claim 9 or 10, wherein the monitoring the repetitively transmitted PDCCH in the at least one PDCCH search space set comprises:
monitoring the repetitively transmitted PDCCH in N consecutive monitoring times of the at least one PDCCH search space set.

12. The method according to claim 9 or 10, wherein the monitoring the repetitively transmitted PDCCH in the at least one PDCCH search space set comprises:
monitoring the repetitively transmitted PDCCH in N non-consecutive monitoring times of the at least one PDCCH search space set.

13. The method according to any one of claims 5, 8 and 12, wherein the indication information further comprises third indication information, wherein the third indication information is used to indicate the N non-consecutive monitoring times.

14. The method according to any one of claims 1-13, wherein the indication information further comprises fourth indication information, wherein the fourth indication information is used to indicate a starting time position of the monitoring times.

15. The method according to claim 14, wherein the starting time position comprises at least one of the following: a starting radio frame, a starting slot or a starting symbol.

16. The method according to any one of claims 1-15, wherein PDCCH aggregation levels corresponding to the repetitively transmitted PDCCH at the N monitoring times are the same.

17. The method according to any one of claims 1-16, wherein control channel elements CCEs of PDCCH candidate positions corresponding to the repetitively transmitted PDCCH at the N monitoring times are the same.

18. A transmission method, applied to a network device, comprising:
sending a repetitively transmitted PDCCH to a terminal device in at least one physical downlink control channel PDCCH search space.

19. The method according to claim 18, further comprising:
sending indication information to the terminal device, wherein the indication information comprises first indication information, and the first indication information is used to indicate that a number of repetitive transmissions of the repetitively transmitted PDCCH is N, wherein N is an integer greater than or equal to 1.

20. The method according to any one of claims 18-19, wherein the sending the repetitively transmitted PDCCH to the terminal device in at least one physical downlink control channel PDCCH search space comprises:
sending the repetitively transmitted PDCCH to the terminal device in one PDCCH search space.

21. The method according to claim 20, wherein the sending the repetitively transmitted PDCCH to the terminal device in one PDCCH search space comprises:
sending the repetitively transmitted PDCCH to the terminal device in N consecutive monitoring times of the one PDCCH search space.

22. The method according to claim 20, wherein the sending the repetitively transmitted PDCCH to the terminal device in one PDCCH search space comprises:
sending the repetitively transmitted PDCCH to the terminal device in N non-consecutive monitoring times of the one PDCCH search space.

23. The method according to any one of claims 18-19, wherein the sending the repetitively transmitted PDCCH to the terminal device in at least one physical downlink control channel PDCCH search space comprises:
sending the repetitively transmitted PDCCH to the terminal device in two or more than two PDCCH search spaces.

24. The method according to claim 23, wherein the sending the repetitively transmitted PDCCH to the terminal device in two or more PDCCH search spaces comprises:
sending the repetitively transmitted PDCCH to the terminal device in N consecutive monitoring times of the two or more than two PDCCH search spaces.

25. The method according to claim 24, wherein sending the repetitively transmitted PDCCH to the terminal device in two or more PDCCH search spaces comprises:
sending the repetitively transmitted PDCCH to the terminal device in N non-consecutive monitoring times of the two or more than two PDCCH search spaces.

26. The method according to any one of claims 18-19, wherein the indication information comprises second indication information, and the second indication information is used to indicate at least one PDCCH search space set, wherein the PDCCH search space set comprises at least one PDCCH search space.

27. The method according to claim 26, wherein the sending the repetitively transmitted PDCCH to the terminal device in at least one physical downlink control channel PDCCH search space comprises:
sending the repetitively transmitted PDCCH to the terminal device in the at least one PDCCH search space set.

28. The method according to claim 26 or 27, wherein the sending the repetitively transmitted PDCCH to the terminal device in the at least one PDCCH search space set comprises:
sending the repetitively transmitted PDCCH to the terminal device in N consecutive monitoring times of the at least one PDCCH search space set.

29. The method according to claim 26 or 27, wherein the sending the repetitively transmitted PDCCH to the terminal device in the at least one PDCCH search space set comprises:
sending the repetitively transmitted PDCCH to the terminal device in N non-consecutive monitoring times of the at least one PDCCH search space set.

30. The method according to any one of claims 22, 25 and 29, wherein the indication information further comprises third indication information, wherein the third indication information is used to indicate the N non-consecutive monitoring times.

31. The method according to any one of claims 18-30, wherein the indication information further comprises fourth indication information, wherein the fourth indication information is used to indicate a starting time position of the monitoring times.

32. The method according to claim 31, wherein the starting time position comprises at least one of the following: a starting radio frame, a starting slot or a starting symbol.

33. The method according to any one of claims 18-32, wherein PDCCH aggregation levels corresponding to the repetitively transmitted PDCCH at the N monitoring times are the same.

34. The method according to any one of claims 18-33, wherein control channel elements CCEs of PDCCH candidate positions corresponding to the repetitively transmitted PDCCH at the N monitoring times are the same.

35. A transmission apparatus, applied to a terminal device, comprising:
a monitoring module, configured to monitor a repetitively transmitted PDCCH in at least one physical downlink control channel PDCCH search space.

36. The apparatus according to claim 35, wherein the apparatus further comprises: a receiving module; and
the receiving module is configured to receive indication information from a network device, wherein the indication information comprises first indication information, and the first indication information is used to indicate that a number of repetitive transmissions of the repetitively transmitted PDCCH is N, wherein N is an integer greater than or equal to 1.

37. The apparatus according to any one of claims 35-36, wherein the monitoring module is specifically configured to:
monitor the repetitively transmitted PDCCH in one PDCCH search space.

38. The apparatus according to claim 37, wherein the monitoring module is specifically configured to:

monitor the repetitively transmitted PDCCH in N consecutive monitoring times of the one PDCCH search space.

39. The apparatus according to claim 37, wherein the monitoring module is specifically configured to:
monitor the repetitively transmitted PDCCH in N non-consecutive monitoring times of the one PDCCH search space.

40. The apparatus according to any one of claims 35-36, wherein the monitoring module is specifically configured to:
monitor the repetitively transmitted PDCCH in two or more than two PDCCH search spaces.

41. The apparatus according to claim 40, wherein the monitoring module is specifically configured to:
monitor the repetitively transmitted PDCCH in N consecutive monitoring times of the two or more than two PDCCH search spaces.

42. The apparatus according to claim 40, wherein the monitoring module is specifically configured to:
monitor the repetitively transmitted PDCCH in N non-consecutive monitoring times of the two or more than two PDCCH search spaces.

43. The apparatus according to any one of claims 35-36, wherein the indication information comprises second indication information, and the second indication information is used to indicate at least one PDCCH search space set, wherein the PDCCH search space set comprises at least one PDCCH search space.

44. The apparatus according to claim 43, wherein the monitoring module is specifically configured to:
monitor the repetitively transmitted PDCCH in the at least one PDCCH search space set.

45. The apparatus according to claim 43 or 44, wherein the monitoring module is specifically configured to:
monitor the repetitively transmitted PDCCH in N consecutive monitoring times of the at least one PDCCH search space set.

46. The apparatus according to claim 43 or 44, wherein the monitoring module is specifically configured to:
monitor the repetitively transmitted PDCCH in N non-consecutive monitoring times of the at least one PDCCH search space set.

47. The apparatus according to any one of claims 39, 42 and 46, wherein the indication information further comprises third indication information, wherein the third indication information is used to indicate the N non-consecutive monitoring times.

48. The apparatus according to any one of claims 35-47, wherein the indication information further comprises fourth indication information, wherein the fourth indication information is used to indicate a starting time position of the monitoring times.

49. The apparatus according to claim 48, wherein the starting time position comprises at least one of the following: a starting radio frame, a starting slot or a starting symbol.

50. The apparatus according to any one of claims 35-49, wherein PDCCH aggregation levels corresponding to the repetitively transmitted PDCCH at the N monitoring times are the same.

51. The apparatus according to any one of claims 35-50, wherein control channel elements CCEs of PDCCH candidate positions corresponding to the repetitively transmitted PDCCH at the N monitoring times are the same.

52. A transmission apparatus, applied to a network device, comprising:
a sending module, configured to send a repetitively transmitted PDCCH to a terminal device in at least one physical downlink control channel PDCCH search space.

53. The apparatus according to claim 52, wherein the sending module is further configured to:
send indication information to the terminal device, wherein the indication information comprises first indication information, and the first indication information is used to indicate that a number of repetitive transmissions of the repetitively transmitted PDCCH is N, wherein N is an integer greater than or equal to 1.

54. The apparatus according to any one of claims 52-53, wherein the sending module is specifically configured to:

send the repetitively transmitted PDCCH to the terminal device in one PDCCH search space.

55. The apparatus according to claim 54, wherein the sending module is specifically configured to:
send the repetitively transmitted PDCCH to the terminal device in N consecutive monitoring times of the one PDCCH search space.

56. The apparatus according to claim 54, wherein the sending module is specifically configured to:
send the repetitively transmitted PDCCH to the terminal device in N non-consecutive monitoring times of the one PDCCH search space.

57. The apparatus according to any one of claims 52-53, wherein the sending module is specifically configured to:
send the repetitively transmitted PDCCH to the terminal device in two or more than two PDCCH search spaces.

58. The apparatus according to claim 57, wherein the sending module is specifically configured to:
send the repetitively transmitted PDCCH to the terminal device in N consecutive monitoring times of the two or more than two PDCCH search spaces.

59. The apparatus according to claim 57, wherein the sending module is specifically configured to:
send the repetitively transmitted PDCCH to the terminal device in N non-consecutive monitoring times of the two or more than two PDCCH search spaces.

60. The apparatus according to any one of claims 52-53, wherein the indication information comprises second indication information, and the second indication information is used to indicate at least one PDCCH search space set, wherein the PDCCH search space set comprises at least one PDCCH search space.

61. The apparatus according to claim 60, wherein the sending module is specifically configured to:
send the repetitively transmitted PDCCH to the terminal device in the at least one PDCCH search space set.

62. The apparatus according to claim 60 or 61, wherein the sending module is specifically configured to:
send the repetitively transmitted PDCCH to the terminal device in N consecutive monitoring times of the at least one PDCCH search space set.

63. The apparatus according to claim 60 or 61, wherein the sending module is specifically configured to:
send the repetitively transmitted PDCCH to the terminal device in N non-consecutive monitoring times of the at least one PDCCH search space set.

64. The apparatus according to any one of claims 56, 59 and 63, wherein the indication information further comprises third indication information, wherein the third indication information is used to indicate the N non-consecutive monitoring times.

65. The apparatus according to any one of claims 52-64, wherein the indication information further comprises fourth indication information, wherein the fourth indication information is used to indicate a starting time position of the monitoring times.

66. The apparatus according to claim 65, wherein the starting time position comprises at least one of the following: a starting radio frame, a starting slot or a starting symbol.

67. The apparatus according to any one of claims 52-66, wherein PDCCH aggregation levels corresponding to the repetitively transmitted PDCCH at the N monitoring times are the same.

68. The apparatus according to any one of claims 52-67, wherein control channel elements CCEs of PDCCH candidate positions corresponding to the repetitively transmitted PDCCH at the N monitoring times are the same.

69. A terminal device, comprising: a transceiver, a processor and a memory; wherein

the memory stores computer-executable instructions; and
the processor executes the computer-executable instructions stored in the memory to cause the processor to execute the communication method according to any one of claims 1 to 17.

**70.** A network device, comprising: a transceiver, a processor and a memory; wherein

the memory stores computer-executable instructions; and
the processor executes the computer-executable instructions stored in the memory to cause the processor to execute the communication method according to any one of claims 18 to 34.

**71.** A computer-readable storage medium, wherein computer-executable instructions are stored in the computer-readable storage medium, and the computer-executable instructions, when executed by a processor, are used to execute the communication method according to any one of claims 1 to 17.

**72.** A computer-readable storage medium, wherein computer-executable instructions are stored in the computer-readable storage medium, and the computer-executable instructions, when executed by a processor, are used to execute the communication method according to any one of claims 18 to 34.

FIG. 1

FIG. 2

FIG. 3

FIG. 4

FIG. 5

Monitor a repetitively transmitted PDCCH in at
least one physical downlink control channel
PDCCH search space

S601

FIG. 6

PDCCH search space 1  PDCCH search space 2  PDCCH

FIG. 7

PDCCH search space 1  PDCCH search space 2  PDCCH

FIG. 8

| | |
|---|---|
| PDCCH search space 1 | PDCCH search space 2 | PDCCH |

Time

FIG. 9

| | |
|---|---|
| PDCCH search space 1 | PDCCH search space 2 | PDCCH |

Time

FIG. 10

Time

PDCCH
search
space 4

PDCCH
search
space 3

PDCCH
search
space 2

PDCCH
search
space 1

PDCCH

FIG. 11

Time

PDCCH
search
space 4

PDCCH
search
space 3

PDCCH
search
space 2

PDCCH
search
space 1

PDCCH

FIG. 12

Send a repetitively transmitted PDCCH to a
terminal device in at least one physical downlink
control channel PDCCH search space

S1301

FIG. 13

Transmission apparatus 140

Monitoring module — 1401

Receiving module — 1402

FIG. 14

Transmission apparatus 150

Sending module — 1501

FIG. 15

Terminal device 160

Processor — 22

24 —

Memory — 23

Transceiver — 21

FIG. 16

Network device 170

Transceiver ⌐ 31

34 ⌐

Memory ⌐ 33

Processor ⌐ 31

FIG. 17

## INTERNATIONAL SEARCH REPORT

| International application No. |
| --- |
| **PCT/CN2020/074884** |

**A. CLASSIFICATION OF SUBJECT MATTER**

H04W 72/04(2009.01)i

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNPAT; CNKI; WPI; EPODOC; 3GPP: 物理下行控制信道, PDCCH, 重复传输, 监听, 监控, 监视, 搜索, 空间, 指示, 次数, repeat, repetition, transmission, monitor, search, space, indicate, number

**C. DOCUMENTS CONSIDERED TO BE RELEVANT**

| Category* | Citation of document, with indication, where appropriate, of the relevant passages | Relevant to claim No. |
| --- | --- | --- |
| X | CN 104811409 A (SHARP CORPORATION) 29 July 2015 (2015-07-29) <br> description, paragraphs [0039]-[0081], and figures 1-5 | 1-72 |
| X | SPREADTRUM COMMUNICATIONS. "Discussion on PDCCH Enhancement on URLLC" <br> *3GPP TSG RAN WG1 Meeting #95 R1-1813064*, 16 November 2018 (2018-11-16), <br> section 2 | 1-72 |
| X | INTEL CORPORATION. "On NR PDCCH repetitions for URLLC" <br> *3GPP TSG RAN WG1 Meeting #92bis R1-1804741*, 20 April 2018 (2018-04-20), <br> section 3 | 1-72 |
| A | CN 104811263 A (ZTE CORPORATION) 29 July 2015 (2015-07-29) <br> entire document | 1-72 |
| A | CN 108934078 A (POTEVIO INFORMATION TECHNOLOGY CO., LTD.) 04 December <br> 2018 (2018-12-04) <br> entire document | 1-72 |
| A | US 2017318620 A1 (MEDIATEK INC.) 02 November 2017 (2017-11-02) <br> entire document | 1-72 |

☐ Further documents are listed in the continuation of Box C. ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **29 October 2020** | **18 November 2020** |

| Name and mailing address of the ISA/CN | Authorized officer |
| --- | --- |
| **China National Intellectual Property Administration (ISA/CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

<div align="center">

**INTERNATIONAL SEARCH REPORT**
**Information on patent family members**

</div>

| International application No. |
| --- |
| **PCT/CN2020/074884** |

| Patent document cited in search report | | | Publication date (day/month/year) | Patent family member(s) | | | Publication date (day/month/year) |
| --- | --- | --- | --- | --- | --- | --- | --- |
| CN | 104811409 | A | 29 July 2015 | WO | 2015109956 | A1 | 30 July 2015 |
| | | | | US | 2017012755 | A1 | 12 January 2017 |
| | | | | JP | 2017509187 | A | 30 March 2017 |
| | | | | EP | 3098998 | A1 | 30 November 2016 |
| CN | 104811263 | A | 29 July 2015 | WO | 2015109846 | A1 | 30 July 2015 |
| CN | 108934078 | A | 04 December 2018 | | None | | |
| US | 2017318620 | A1 | 02 November 2017 | CN | 109792773 | A | 21 May 2019 |
| | | | | EP | 3434065 | A4 | 26 June 2019 |
| | | | | WO | 2017186167 | A1 | 02 November 2017 |
| | | | | EP | 3434065 | A1 | 30 January 2019 |
| | | | | TW | 201742487 | A | 01 December 2017 |
| | | | | BR | 112018070709 | A2 | 12 February 2019 |

Form PCT/ISA/210 (patent family annex) (January 2015)